Europäisches Patentamt

European Patent Office

Office européen des brevets

(19)

(11) Veröffentlichungsnummer : **0 103 334**
**B1**

(12) **EUROPÄISCHE PATENTSCHRIFT**

(45) Veröffentlichungstag der Patentschrift :
06.05.87

(21) Anmeldenummer : 83201279.3

(22) Anmeldetag : 06.09.83

(51) Int. Cl.⁴ : **B 01 D 29/32**

(54) **Filterkerze und Verfahren zu ihrer Herstellung.**

(30) Priorität : 13.09.82 CH 5419/82

(43) Veröffentlichungstag der Anmeldung :
21.03.84 Patentblatt 84/12

(45) Bekanntmachung des Hinweises auf die Patenterteilung : 06.05.87 Patentblatt 87/19

(84) Benannte Vertragsstaaten :
AT BE CH DE FR GB IT LI LU NL SE

(56) Entgegenhaltungen :
DE-A- 2 308 987
FR-A- 1 363 197
US-A- 3 935 105

(73) Patentinhaber : DrM, Dr. Müller AG
Alte Landstrasse 421
CH-8708 Männedorf ZH (CH)

(72) Erfinder : Schumacher, Ivo
Haldenstrasse 67
CH-8708 Männedorf/ZH (CH)

(74) Vertreter : Herrmann, Peter Johannes, Dr. Patentanwalt
Lerchenbühlhöhe 5
CH-6045 Meggen (CH)

EP 0 103 334 B1

## Beschreibung

Die Erfindung betrifft eine Filterkerze, die hängend in in einem Druckbehälter angebracht ist, bestehend aus einem Stützkörper, der mit einem flüssigkeitsdurchlässigen, abgedeckten Filtergewebe bespannt ist.

Druckfilterelemente der Art sind nach der DE-A-27 41 639 bekannt. Darin werden in einem Druckbehälter eine Anzahl hängender, mit Filtergeweben überzogene Filterelemente beschrieben.

Aus der DE-A-2 308 987 ist eine Filterkerze bekannt, die hängend in einem Druckbehälter angebracht ist. Die Filterkerze besteht aus einem Stützkörper, welcher mit einem Filtergewebe versehen ist und auf dem eine Drahtwendel von eckigem Durchmesser zur besseren Entfernung eines Filterkuchens angebracht ist. Obwohl solche Drähte mit drei- oder viereckigem Durchmesser gegenüber solchen mit rundem Durchmesser eine Verbesserung in Bezug auf die Verhinderung der Verteilung der Filtermittelschicht aufweisen, ist die Verwendung von Drähten mit Nachteilen behaftet. Durch ihre dreidimensionale Ausdehnung beanspruchen sie Material, welches das Gewicht einer hängenden Filterkerze nachteilig erhöht. Auch konstruktiv ist die Anbringung von Drahtwendeln, welche an beiden Enden befestigt werden müssen, von grossem Aufwand. Durch die enge Wicklung wird ein grosser Teil der Filterfläche benötigt, wodurch eine Reduktion der Filterleistung entsteht. Durch Brückenbildung bei grösserer Filterkuchenstärke lässt es sich nicht vermeiden, dass der Filterkuchen beim Rückspülen als Ganzes abgeworfen wird.

Es sind auch waagerecht angeordnete, an beiden Stirnseiten befestigte Kerzenfilterelemente bekannt, welche zwei axial gegenüberliegende hohe Nähte aufweisen, welche die Trennstellen beim Abwerfen eines Filterkuchens bilden (US-A-3 935 105).

Die Entfernung des Filterkuchens weist bei solchen Filterelementen keine grossen Schwierigkeiten auf, solange der Kuchen in verhältnismässig feuchtem Zustand zu entfernen ist. Probleme treten jedoch dann auf, wenn der Filterkuchen in trockener Form ausgetragen werden soll. Bei der Filtration, beispielsweise von Kalk, entsteht so auf der Filterfläche eines beispielsweise 200 cm langen und 8 cm dicken Filterelements, welches mit einem Filtergewebe überzogen ist, ein von oben nach unten durchgehender Filterkuchen von 2-3 cm Dicke. Beim Rückspülen mit Luft wird der Kuchen in 20-50 cm langen Stücken abgeworfen. Bei der Trockenaustragung des Filterkuchens verklemmen sich diese Rückstände gegenseitig zwischen den benachbarten Filterelementen und fallen nicht in den Boden des Behälters, wodurch die Austragung behindert wird. Dies ist besonders bei langen Filterkerzen der Fall, bei welchen sich grosse und lange Rückstandstücke bilden.

Aufgabe der Erfindung ist es, eine Filterkerze zu schaffen, welche die Erzeugung von kleineren Rückstandstücken und eine bessere Austragung ermöglicht.

Die Aufgabe wird erfindungsgemäss nach Patentanspruch 1 gelöst und ist dadurch gekennzeichnet, dass als Abdeckung der Filtergewebe gegeneinander rechtwinklig verlaufende, ringförmige und vertikale 0,5 bis 3 cm breite undurchlässige Bänder vorgesehen sind.

Die Erfindung soll anhand einer Zeichnung erläutert werden. Es zeigen :

Figur 1　ein Filterelement im Längsschnitt,

Figur 2 a + b　das Filterelement mit den vertikalen undurchlässigen Bändern und

Figur 3　die Kombination von Ring- und Längsbändern.

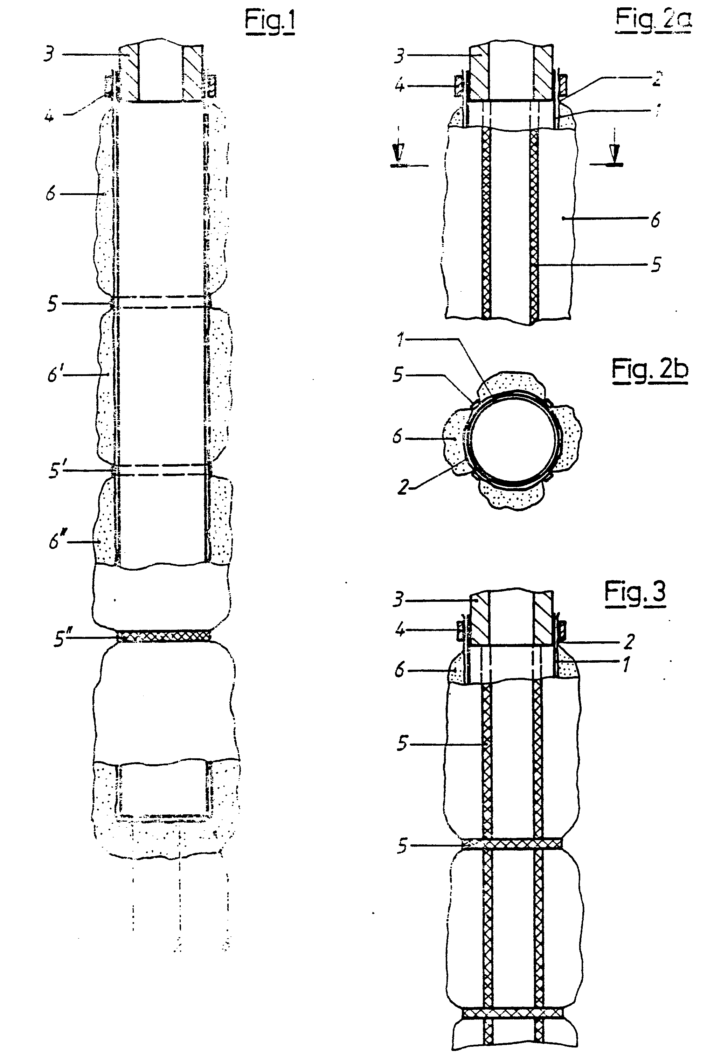

Das Filterelement, gemäss Fig. 1, besteht aus einem perforierten Stützkörper 1, der mit einem Filtergewebe 2 überzogen ist. Das Filtergewebe 2 bildet einen Schlauch, welcher in seinem unteren Teil geschlossen, in seinem oberen Teil offen und an einem Abflussrohr 3 mit einem Befestigungsring angebracht ist. In Abständen von 5-20 cm ist das gas- und flüssigkeitsdurchlässige Filtergewebe von Ring- und Längsbändern 5 umgeben, welche undurchlässig sind. Je nach der Länge des Filterelementes können beliebig viele solcher Bänder 5 angebracht sein. Ein Filterkuchen 6, 6', 6", 6''', kann sich so nur auf den durchlässigen Teilen des Filtergewebes 2 ablagern.

Die Figuren 2 a und b zeigen das Filtergewebe 2, das mit undurchlässigen Bändern 5 versehen ist. Figur 2 a zeigt einen Längsschnitt, Fig. 2 b einen Querschnitt durch das Filterelement. Gemäss Fig. 3, sind die Längs- und Ringbänder zusammen angebracht. Die undurchlässigen Bänder 5 können in bekannter Weise durch Aufspritzen eines Kunststoffes, beispielsweise eines Kunstharzes, auf das Filtergewebe 2 in Abständen von etwa 5-20 cm, vorzugsweise 8 cm, und einer Breite von 0,5-3 cm, vorzugsweise 1 cm, undurchlässig gemacht werden.

Beim Entfernen des Filterkuchens durch Rückspülen, beispielsweise mit einem Gas, können so Rückstandstücke von maximal 20 cm Länge anfallen. Diese Stücke neigen viel weniger zum Verstopfen als lange Stücke.

## Patentansprüche

1. Filterkerze, die hängend in einem Druckbehälter angebracht ist, bestehend aus einem rohrförmigen Stützkörper, der mit einem flüssigkeitsdurchlässigen, abgedeckten Filtergewebe bespannt ist, dadurch gekennzeichnet, dass als Abdeckung der Filtergewebe gegeneinander rechtwinklig verlaufende ringförmige und vertikale 0,5 bis 3 cm breite undurchlässige Bänder (5) vorgesehen sind.

2. Filterkerze nach Anspruch 1, dadurch gekennzeichnet, dass die Abstände zwischen den Bändern 5 bis 20 cm betragen.

## Claims

1. Filter candle suspendably mounted in a pressure vessel, comprising a tubular support body provided with a covered permeable filter tissue, wherein the filter tissue is covered with a plurality of circular-shaped impermeable members applied rectangularly to impermeable members having a width between 0,5 and 3 cm and being arranged in the longitudinal axis of the filter candle.

2. Filter candle as claimed in claim 1, wherein the spaces between the impermeable members are 5 to 20 cm.

## Revendications

1. Bougie filtrante qui est montée suspendue à l'intérieur d'une cuve pressurisée et se compose d'un corps de soutien tubulaire qui est gainé d'un tissu filtrant perméable aux liquides, garni d'un revêtement, caractérisée en ce que le revêtement du tissu filtrant est constitué par des bandes imperméables (5) annulaires et verticales qui s'étendent à angle droit les unes par rapport aux autres et ont une largeur de 0,5 à 3 cm.

2. Bougie filtrante selon la revendication 1, caractérisée en ce que les intervalles entre les bandes sont de 5 à 20 cm.

Fig.1

Fig.2a

Fig.2b

Fig.3